# FASCICULE DE BREVET EUROPEEN

(11) **EP 2 108 788 B1**
(45) Date de publication et mention de la délivrance du brevet: **07.09.2011**
(21) Numéro de dépôt: 09155643.1
(22) Date de dépôt: 19.03.2009
(51) Int. Cl.: F01L 3/06, F02B 31/04, F02F 1/42

(54) **Moteur à combustion interne comprenant des conduits d'admission usines en chanfrein**
Verbrennungsmotor mit abgefasten Einlassleitungen
Internal combustion engine comprising intake conduits machined on a chamfer

(30) Priorité: 09.04.2008 FR 0852365
(43) Date de publication de la demande: 14.10.2009
(73) Titulaire: PEUGEOT CITROËN AUTOMOBILES S.A., 78140 Vélizy Villacoublay (FR)
(72) Inventeur: Lutz, Patrick, 76600 Le Havre (FR); Chemisky, Jean-Pierre, 92400 Courbevoie (FR); Gimbres, David, 94510 La Queue en Brie (FR)
(74) Mandataire: Ménès, Catherine

(56) Documents cités:
- EP-A- 1 640 567
- EP-A1- 1 944 476
- EP-A1- 1 944 477
- DD-A3- 234 998
- US-A- 3 145 696
- US-A- 3 802 404
- US-A- 4 366 787

## Description

La présente invention concerne un moteur à combustion interne de véhicule automobile du type comprenant un premier cylindre, un deuxième cylindre, et une culasse formant avec chaque cylindre une chambre de combustion, la culasse comportant :
- au moins un premier conduit d'admission de gaz débouchant sur une face de sortie de la culasse dans la chambre de combustion du premier cylindre, le ou chaque premier conduit comportant successivement, dans le sens orienté vers la face de sortie, un premier siège de soupape adapté pour recevoir une première soupape, puis une première embouchure vers la face de sortie, la première embouchure ayant une géométrie adaptée pour générer un premier niveau de swirl dans le premier cylindre ;
- au moins un deuxième conduit d'admission de gaz débouchant sur une face de sortie de la culasse, dans la chambre de combustion du deuxième cylindre, le ou chaque deuxième conduit comportant successivement, dans le sens orienté vers la face de sortie, un deuxième siège de soupape adapté pour recevoir une deuxième soupape, puis une deuxième embouchure vers la face de sortie, la deuxième embouchure ayant une géométrie adaptée pour générer un deuxième niveau de swirl dans le deuxième cylindre.

Le document FR-A-2 875 537 décrit une culasse de moteur à combustion interne de véhicule automobile comportant plusieurs conduits d'admission des gaz débouchant sur une face de sortie de la culasse. Chaque conduit d'admission comporte, dans le sens orienté vers la face de sortie de la culasse, un siège de soupape adapté pour recevoir une soupape, puis une embouchure vers la face de sortie. Chaque embouchure a une géométrie identique adaptée pour générer un mouvement de swirl dans le cylindre. Cette géométrie comprend une face en portion de tronc de cône ayant pour axe l'axe du siège de soupape et améliorant la perméabilité de la soupape, et une face en portion de cylindre dont l'axe est incliné par rapport à l'axe du siège de soupape. Cette face en portion de cylindre est adaptée pour générer le mouvement de swirl décrit ci-dessus.

Néanmoins, le répartiteur d'admission en amont des conduits d'admission génère une hétérogénéité des écoulements d'air à l'entrée de chaque cylindre. Il en résulte des disparités dans le niveau de swirl moyen entre les différents cylindres. Ces disparités occasionnent un déroulement de combustion différent dans les différents cylindres, et donc, pour un point de fonctionnement moteur prédéterminé, et des réglages donnés identiques pour chaque cylindre, une pénalité sur le niveau de pollution, notamment sur les émissions de particules dans le cas d'un moteur Diesel.

Il est connu des demandes de brevets européens EP 1944476 et EP 1944477 un moteur à combustion interne dont les sièges de soupape sont usinés en deux chanfreins désaxés afin d'augmenter le niveau de swirl dans le cylindre sans trop nuire à la perméabilité du conduit d'admission. La problématique des disparités du niveau de swirl entre les différents cylindres n'est pas mentionnée dans ces documents.

Un but de l'invention est de réduire les émissions polluantes générées par le moteur.

A cet effet, l'invention a pour objet un moteur du type précité, caractérisé en ce que la première et la deuxième embouchure comprennent chacune au moins deux portions de tronc de profil de révolution distinctes s'évasant vers la face de sortie et désaxées par rapport à l'axe du siège de soupape correspondant, et en ce que le désaxage d'au moins l'une des portions désaxées de la deuxième embouchure est différent du désaxage de chaque portion désaxée de la première embouchure pour que le niveau de swirl dans le premier cylindre soit sensiblement égal au niveau de swirl dans le deuxième cylindre.

Selon des modes particuliers de réalisation, le moteur comporte l'une ou plusieurs des caractéristiques suivantes, prise(s) isolément ou suivant toutes les combinaisons techniquement possibles :
- la première partie de tronc est obtenue par un premier fraisage effectué au moyen d'une fraise tronconique d'axe parallèle à l'axe X-X' du siège de la soupape mais espacé d'une distance « e1 » suivant une direction d'orientation Y-Y' formant un angle α avec un axe de référence « d » et en ce que la deuxième partie de tronc est obtenue par un deuxième fraisage tronconique d'axe parallèle à l'axe X-X' et espacé d'une distance « e2 » suivant une direction d'orientation Z-Z' formant un angle « β » avec l'axe de référence « d ».
- la première embouchure comprend en outre au moins une portion de tronc de profil de révolution coaxiale à l'axe du siège de soupape correspondant.

L'invention sera mieux comprise à la lecture de la description qui va suivre, donnée uniquement à titre d'exemple, et se référant aux dessins annexés, sur lesquels :
- la figure 1 est une vue schématique partielle en section d'un conduit d'admission d'une culasse selon l'invention et d'un cylindre, le conduit d'admission comportant un siège de soupape et possédant un usinage tronconique coaxial au siège de soupape ;
- la figure 2 est une vue schématique partielle en section d'un conduit d'admission possédant un unique usinage tronconique désaxé par rapport au siège de soupape ;
- la figure 3 est une vue schématique partielle de dessous du conduit d'admission de la figure 2 ;
- la figure 4 est une vue analogue à la figure 2 d'un conduit d'admission possédant un usinage tronconique coaxial au siège de soupape et un usinage tronconique désaxé ;
- la figure 5 est une vue analogue à la figure 3 du conduit d'admission de la figure 4 ;
- la figure 6 est une vue analogue aux figures 2 et 4 d'un conduit d'admission possédant deux usinages tronconiques désaxés ;
- la figure 7 est une vue analogue aux figures 3 et 5 du conduit d'admission de la figure 6 ;
- la figure 8 est une vue schématique illustrant l'aérodynamique en amont et à l'intérieur de chacun des cylindres d'un moteur de l'art antérieur ;
- la figure 9 est une vue schématique analogue à la figure 8 illustrant l'aérodynamique des gaz d'un moteur selon l'invention ;
- la figure 10 est un graphique illustrant la perméabilité et le niveau de swirl dans les cylindres, pour différentes géométries des conduits d'admission ; et
- la figure 11 est un graphique illustrant le niveau d'émission de particules en fonction du niveau de swirl dans chaque cylindre.

La présente invention concerne un moteur 2 à combustion interne de véhicule automobile comprenant une culasse 4 et quatre cylindres 6 délimitant chacun avec la culasse une chambre de combustion.

La culasse 4 comprend huit conduits d'admission de gaz, soit deux conduits d'admission 8 de gaz débouchant dans chaque cylindre 6 et huit conduits d'échappement (non représentés). Les conduits d'échappement ont par exemple une géométrie identique aux conduits d'admission 8.

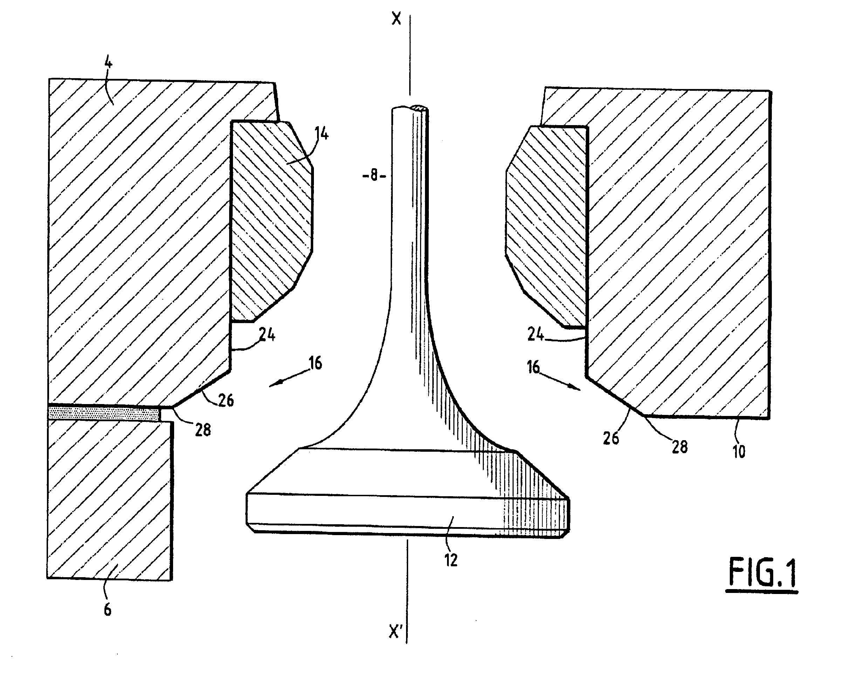

Comme illustré sur les figures 1 à 7, les conduits 8 débouchent sur une face de sortie 10 de la culasse 4 et sont munis d'une soupape d'obturation mobile 12. Chaque conduit d'admission 8 comporte, dans le sens orienté vers la face de sortie 10, un siège de soupape 14 d'axe X-X' adapté pour recevoir la soupape 12 en appui étanche, puis une embouchure 16 vers la face de sortie 10.

Les figures 1 à 7 illustrent différentes géométries possibles de l'embouchure 16. Ces différentes géométries seront décrites plus en détail ci-dessous.

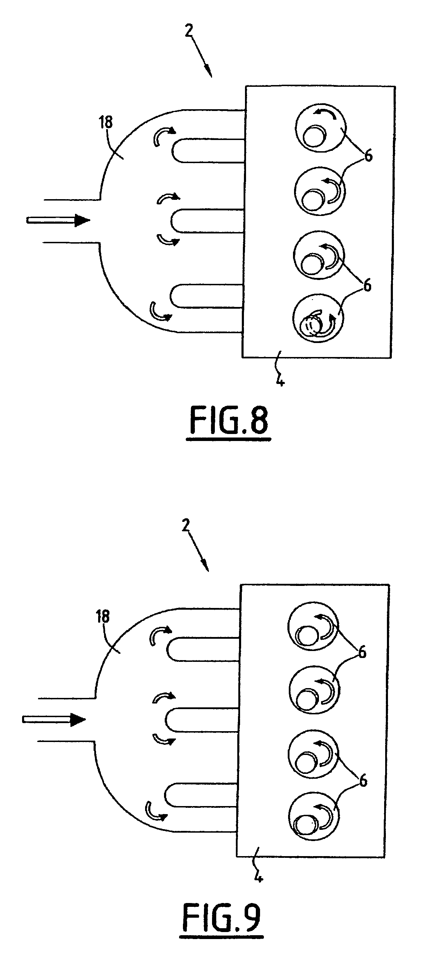

La figure 8 illustre un moteur 2 de l'art antérieur, dans lequel les géométries des embouchures 16 sont identiques pour chaque cylindre 6. Comme illustré sur cette figure, le répartiteur 18 de gaz d'admission en amont de la culasse 4 génère une hétérogénéité des écoulements d'admission en amont des cylindres 6. Il en résulte que le niveau moyen de swirl dans chaque cylindre est hétérogène.

Dans la culasse selon l'invention illustrée sur la figure 9, l'embouchure 16 des conduits d'admission 8 de chaque cylindre 6 a une géométrie propre adaptée pour que le niveau moyen de swirl soit identique dans chaque cylindre 6. Ainsi, la culasse comporte au moins deux embouchures de conduit d'admission avec des géométries différentes.

Les géométries des embouchures 16 décrites sur les figures 1 à 7 sont des exemples possibles de différentes géométries d'embouchure qu'il est possible de combiner.

Sur la figure 1, l'embouchure 16 présente une symétrie de révolution autour de l'axe X-X' du siège de soupape 14. Cette embouchure comprend une portion cylindrique 24 débouchant dans une portion inférieure tronconique 26, cette portion tronconique 26 débouche sur la face de sortie 10 suivant un bord d'embouchure 28.

Quant au siège de soupape 14, il a une forme générale de venturi et présente une symétrie de révolution autour de son axe X-X'.

La géométrie d'embouchure 16 est obtenue par un fraisage d'axe X-X' au moyen d'une fraise tronconique.

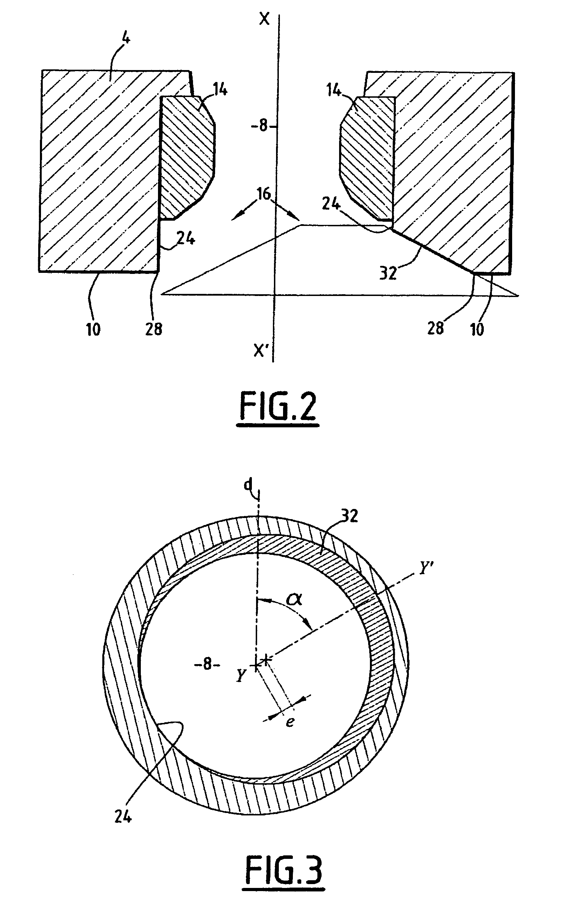

Le conduit d'admission des figures 2 et 3 diffère du conduit de la figure 1 en ce qu'il est obtenu par fraisage suivant un axe parallèle à l'axe X-X' mais espacé de l'axe X-X' d'une distance « e » suivant un axe d'orientation Y-Y' formant un angle « α » avec la droite « d » servant de référence de mesure d'angle. Cette droite « d » est parallèle à la face de sortie 10, et coupe l'axe X-X' et l'axe central du cylindre 6. Dans tout ce qui suit, la droite « d » sert de référence pour la mesure des angles formés par les axes d'orientation.

C'est pourquoi le conduit d'admission 8 des figures 2 et 3 diffère du conduit d'admission de la figure 1 en ce qu'il présente, outre la portion cylindrique 24, une unique portion de tronc de cône désaxée 32 suivant l'axe d'orientation Y-Y' et adaptée pour générer un mouvement de swirl dans le cylindre.

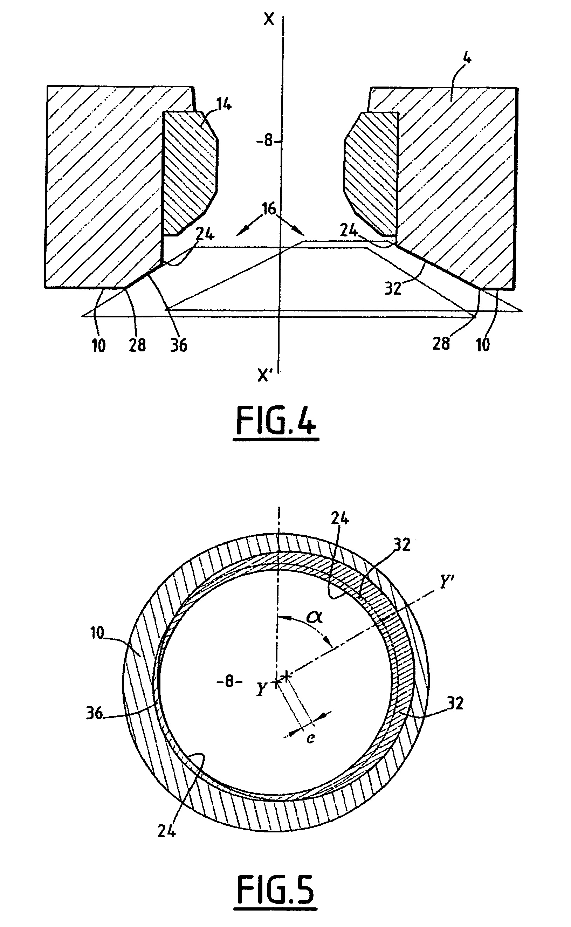

Le conduit d'admission 8 des figures 4 et 5 combine les usinages des figures 1 et 2. Il est obtenu par un premier fraisage tronconique d'axe X-X' et un second fraisage tronconique d'axe parallèle à l'axe X-X' et espacé de l'axe X-X' d'une distance « e » suivant un axe d'orientation Y-Y' formant un angle α avec l'axe de référence « d ».

Le conduit d'admission des figures 4 et 5 diffère ainsi du conduit d'admission des figures 2 et 3 en ce qu'il comporte, outre la portion cylindrique 24 et la portion de tronc de cône 32 désaxée, une portion de tronc de cône 36 d'axe X-X' (c'est-à-dire coaxial au siège de soupape 14).

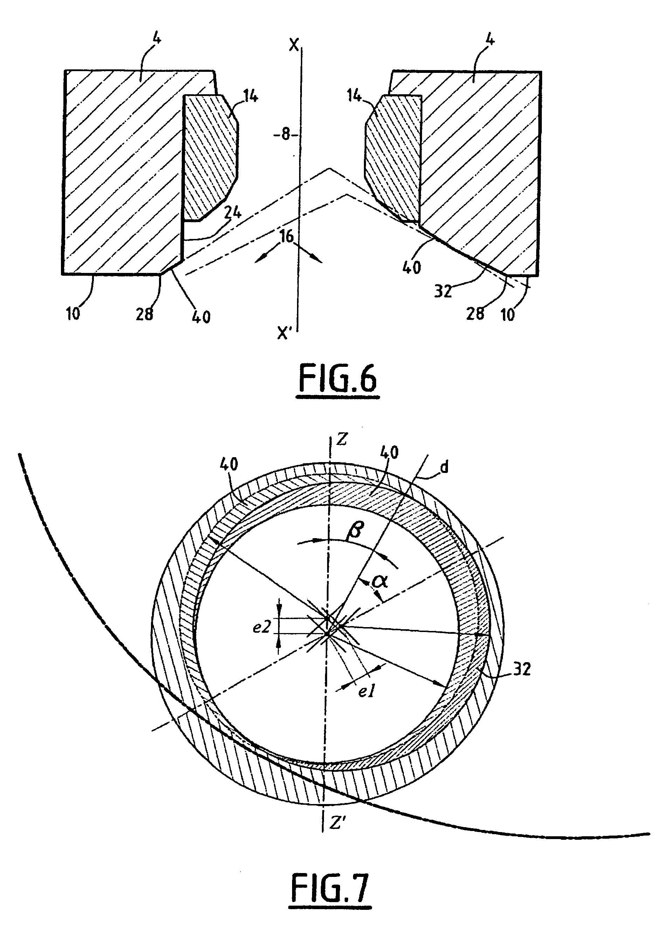

Enfin, le conduit d'admission 8 illustré sur les figures 6 et 7 diffère du conduit d'admission 8 des figures 4 et 5 en ce que l'embouchure 16 est obtenue par un double fraisage désaxé.

Le premier fraisage est effectué au moyen d'une fraise tronconique d'axe parallèle à l'axe X-X' mais espacé d'une distance « e1 » suivant une direction d'orientation Y-Y' formant un angle α avec l'axe de référence « d » et un deuxième fraisage tronconique d'axe parallèle à l'axe X-X' et espacé d'une distance « e2 » suivant une direction d'orientation Z-Z' formant un angle « β » avec l'axe de référence « d ».

L'embouchure 16 du conduit d'admission des figures 6 et 7 comprend ainsi, outre la portion de cylindre d'axe X-X' 24 et la portion tronconique désaxée 32 suivant l'axe Y-Y', une portion tronconique désaxée 40 suivant l'axe Z-Z'.

Sur la figure 9, dans l'hypothèse où les conditions aérodynamiques en entrée de chacun des cylindres 6 seraient identiques à la figure 8, la géométrie des embouchures 16 des conduits d'admission 8 du premier cylindre 6 (en haut sur cette figure) est adaptée pour générer un niveau de swirl moyen plus important que dans la figure 8, à conditions aérodynamiques d'entrée identiques à la figure 8.

Les conditions aérodynamiques étant, dans le conduit du répartiteur d'admission 18 en amont du premier cylindre de l'exemple illustré sur les figures 8 et 9, plus défavorables à la génération d'un niveau prédéterminé de swirl que dans les autres cylindres, il importe donc que la géométrie des embouchures 16 du premier cylindre soit adaptée pour produire, à condition aérodynamiques d'entrée identiques, un swirl plus important que dans la figure 8.

Les embouchures des conduits 2 et 3 restent identiques entre les figures 8 et 9 car les niveaux de swirl de ces deux conduits sont déjà proche de la moyenne culasse. En fonction des résultats de chaque cylindre, le choix de modifier, ou non, l'embouchure doit s'adapter à l'objectif d'homogénéité de swirl cylindre à cylindre au niveau de la moyenne culasse.

Les conditions aérodynamiques étant, dans le conduit du répartiteur d'admission 18 en amont du quatrième cylindre de l'exemple illustré sur les figures 8 et 9, plus favorables à la génération d'un niveau prédéterminé de swirl que dans les autres cylindres, il importe donc que la géométrie des embouchures 16 du quatrième cylindre soit adaptée pour produire, à condition aérodynamiques d'entrée identiques, un swirl moins important que dans la figure 8.

Les géométries des embouchures 16 des différents cylindres sont ainsi adaptées pour générer un niveau moyen de swirl mesuré en Nombre de swirl (Ns), identique cylindre à cylindre, malgré des conditions aérodynamiques d'entrée hétérogènes

Dans l'exemple illustré sur la figure 9, les embouchures 16 des trois premiers cylindres (trois cylindres du haut sur cette figure) ont une embouchure 16 dont la géométrie est celle illustrée sur les figures 2 et 3.

Pour le premier cylindre, la distance « e » est égale à 1,2 mm, tandis que l'angle α est égal à -80 °.

Dans le deuxième cylindre, la distance « e » est égale à 1 mm, tandis que l'angle α est égal à 45 °.

Dans le troisième cylindre, la distance « e » est égale à 1 mm, tandis que l'angle α est égal à 45°.

La géométrie des embouchures 16 des conduits d'admission 8 du quatrième cylindre 6 est selon l'exemple illustré sur les figures 6 et 7, avec une distance « e1 » égale à 1,3 mm, une distance « e2 » égale à 1 mm, un angle α égal à 90 °et un angle β égal à -80°.

Il est important de noter que ces exemples sont fournis à titre purement illustratif.

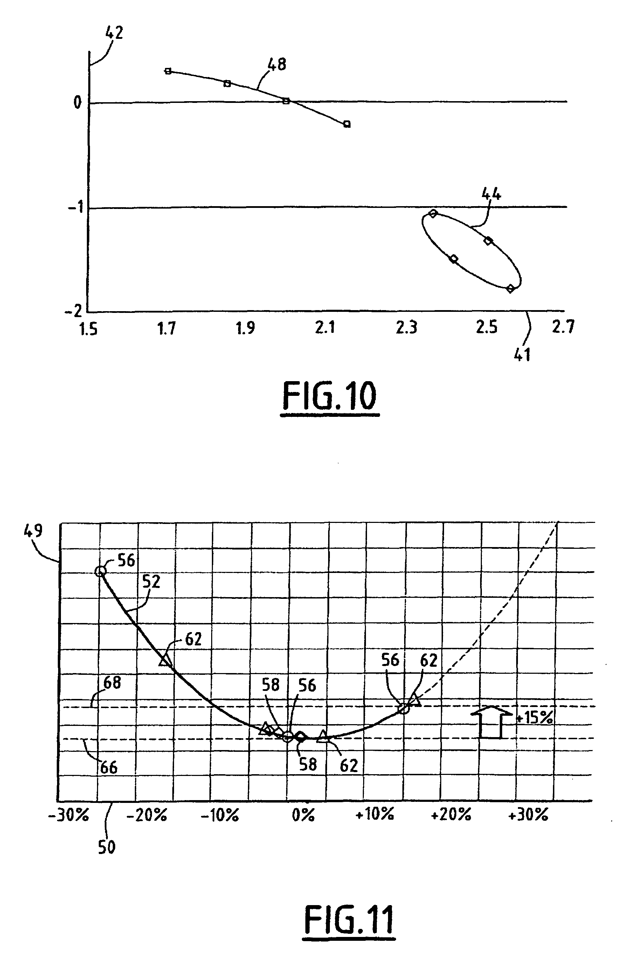

Pour illustrer l'influence du choix de la géométrie de l'embouchure 16, la figure 10 illustre les variations du nombre de swirl (en Ns sur l'axe 41) et de la perméabilité du conduit d'admission 8 (en cf.β x 10⁻³ sur l'axe 42) pour différentes géométries de l'embouchure 16.

Une première courbe 44 illustre les variations du nombre de swirl et de la perméabilité pour une embouchure du type de celle décrite sur les figures 2 et 3. Les différents points sont obtenus par rotation du seat chamfer (variation de l'angle α).

Une deuxième courbe 48 illustre quant à elle les variations du nombre de swirl et de la perméabilité obtenues en variant la distance « e2 » de la portion 40 pour une embouchure 16 telle que décrite sur les figures 6 et 7.

La géométrie de l'embouchure 16 est donc propre à être choisi pour produire un niveau prédéterminé de swirl.

Il est à noter qu'une multitude d'autres niveaux de swirl sont atteignables en faisant par exemple varier les angles α et B des embouchures des figures 6 et 7. La latitude importante permise dans le choix de la géométrie de l'embouchure 16 des conduits d'admission 8 de chaque cylindre 6 est essentiellement due à la faible dépendance de la perméabilité au changement de cette géométrie. La figure 10 illustre en effet une variation de perméabilité de l'ordre de 1.10⁻³ pour un niveau moyen du coefficient cf.β d'environ 0,08.

Le système de combustion ainsi que la calibration d'un moteur Diesel sont définis pour un niveau de swirl dit nominal correspondant à un niveau optimal. Tout écart par rapport à ce niveau nominal se traduit par une dégradation des performances en pleine charge (puissance, température à l'échappement, fumée) ou du niveau des émissions polluantes (notamment en charge partielle).

Des essais de robustesse au swirl ont été menés sur un moteur au cours de son développement et ont permis de mettre en évidence l'effet d'une non hétérogénéité du swirl cylindre à cylindre, notamment sur les émissions de particules.

La figure 11 illustre en effet le niveau d'émission de particules par cylindre (sur l'axe 49) en fonction de l'écart du niveau de swirl dans le cylindre par rapport au niveau nominal (sur l'axe 50). 0% correspond à un niveau de swirl nominal moyen de la culasse. Ces résultats résultent d'une intégration à partir d'essais sur sept points de fonctionnement représentatif de ce cycle.

La courbe 52 décrit une parabole et représente la quantité d'émission de particules en fonction du niveau de swirl avec une calibration unique sur un moteur ayant un niveau de swirl homogène cylindre à cylindre. Cette courbe 52 a été obtenue par des essais réalisés avec des culasses présentant dans chaque cylindre un niveau de swirl moyen identique, différent du niveau nominal du graphique. Cette courbe 52 comprend trois points circulaires 56.

Les points 58 en losange représentent les différentes valeurs de swirl pour une culasse dont les cylindres ont un niveau de swirl identique, et égal au niveau nominal, selon l'invention.

Les points 62 en triangle illustrent quant à eux le niveau d'émission pour chaque cylindre dans le cas d'une culasse dont les cylindres ont des niveaux de swirl différents mais un swirl moyen égal au niveau nominal (moteur de l'art antérieur). Les valeurs de ces points sont résumées dans le tableau ci-dessous :

| | Référence | Cylindre 1 | Cylindre 2 | Cylindre 3 | Cylindre 4 |
|---|---|---|---|---|---|
| Ns | Ns moyen de la culasse | -3% | +5% | +16% | -16% |
| Particules (g/km) | Niveau moyen de particule d'une culasse à swirl homogène au nominal (selon l'invention) | +3% | 0 | +16% | +40% |

Les références "cylindre 1 ", "cylindre 2", "cylindre 3", "cylindre 4" correspondent respectivement aux quatre cylindres illustrés sur la figure 8, pris de haut en bas sur la figure.

La droite 66 correspond au niveau d'émission de particules obtenues avec la culasse selon l'invention (points 58), tandis que la droite 68 illustre le niveau moyen de particules obtenu avec une culasse de l'art antérieur (correspondant aux points 62).

Le niveau d'émission des particules correspondant à la droite 68 est 15% supérieur à celui correspondant à la droite 66.

Il en résulte que l'invention permet une réduction significative du niveau d'émission de particules. La durée de vie du filtre à particules s'en trouve prolongée.

En outre, il est possible de supprimer les échangeurs EGR et de diminuer ainsi le coût du système d'injection.

Enfin, pour un même niveau de particules émises, la pression dans le rail commun d'injection peut-être diminuée, ce qui diminue les émissions acoustiques.

Pour un même niveau de particules émises, il est également possible de modifier la calibration en recalant par exemple les injections pour diminuer la consommation.

Enfin, une diminution des écarts de swirl de cylindre à cylindre présente également l'avantage de diminuer le niveau de fumée en pleine charge et de permettre une amélioration du couple maximum du moteur dans les cas où celui-ci est limité par le niveau de fumée.

En variante, les conduits d'échappement 8 ont une embouchure 16 dont la géométrie est différente de celle des conduits d'admission, notamment pour des raisons d'encombrement ou de perméabilité.

En variante également, le moteur 2 comporte un nombre différent de cylindres, par exemple six cylindres.

En variante encore, les géométries des embouchures 16 des différents conduits d'admission sont différentes à l'intérieur d'un même cylindre si chaque cylindre comporte plus d'un conduit admission.

Dans les exemples des figures 2 à 7, le désaxage des portions de l'embouchure est obtenu en espaçant l'axe de ces portions, de l'axe X-X' du siège de soupape, mais en restant parallèle à l'axe X-X'. En variante, le désaxage est obtenu par inclinaison des axes des parties désaxées par rapport à l'axe du siège de soupape. Le brevet FR-A-2 875 537 donne un exemple de ce type de désaxage. En variante encore, les désaxages par inclinaison et par espacements sont combinés. En variante, les embouchures 16 des différents cylindres 6 ont une géométrie de tout type adapté.

## Revendications

1. Moteur (2) à combustion interne de véhicule automobile du type comprenant un premier cylindre (6), un deuxième cylindre (6), et une culasse (4) formant avec chaque cylindre (6) une chambre de combustion, la culasse (4) comportant :
- au moins un premier conduit d'admission (8) de gaz débouchant sur une face de sortie (10) de la culasse (4) dans la chambre de combustion du premier cylindre (6), le ou chaque premier conduit (8) comportant successivement, dans le sens orienté vers la face de sortie (10), un premier siège de soupape (14) adapté pour recevoir une première soupape (12), puis une première embouchure (16) vers la face de sortie (10), la première embouchure (16) ayant une géométrie adaptée pour générer un premier niveau de swirl dans le premier cylindre (6) ;
- au moins un deuxième conduit d'admission (8) de gaz débouchant sur une face de sortie (10) de la culasse (4), dans la chambre de combustion du deuxième cylindre (6), le ou chaque deuxième conduit (8) comportant successivement, dans le sens orienté vers la face de sortie (10), un deuxième siège de soupape adapté pour recevoir une deuxième soupape (12), puis une deuxième embouchure (16) vers la face de sortie (10), la deuxième embouchure (16) ayant une géométrie adaptée pour générer un deuxième niveau de swirl dans le deuxième cylindre (6),
**caractérisé en ce que** la première et la deuxième embouchure (16) comprennent chacune au moins deux portions de tronc de profil de révolution (32, 40) distinctes s'évasant vers la face de sortie (10) et désaxées par rapport à l'axe du siège de soupape correspondant (14), et **en ce que** le désaxage d'au moins l'une des portions désaxées de la deuxième embouchure (16) est différent du désaxage de chaque portion désaxée de la première embouchure (16) pour que le niveau de swirl dans le premier cylindre soit sensiblement égal au niveau de swirl dans le deuxième cylindre.

2. Moteur (2) selon la revendication 1, **caractérisé en ce que** la première partie de tronc est obtenue par un premier fraisage effectué au moyen d'une fraise tronconique d'axe parallèle à l'axe X-X' du siège de la soupape mais espacé d'une distance « e1 » suivant une direction d'orientation Y-Y' formant un angle α avec un axe de référence « d » et **en ce que** la deuxième partie de tronc est obtenue par un deuxième fraisage tronconique d'axe parallèle à l'axe X-X' et espacé d'une distance « e2 » suivant une direction d'orientation Z-Z' formant un angle « β » avec l'axe de référence « d ».

3. Moteur (2) selon l'une quelconque des revendications 1 à 2, **caractérisé en ce que** la première embouchure (16) comprend en outre au moins une portion de tronc de profil de révolution coaxiale à l'axe du siège de soupape correspondant (14).

## Claims

1. Motor vehicle internal combustion engine (2) of the type comprising a first cylinder (6), a second cylinder (6) and a cylinder head (4) which forms, a combustion chamber (4) with each cylinder (6), the cylinder head (4) comprising:
- at least one first gas inlet duct (8) opening into a discharge face (10) of the cylinder head (4) in the combustion chamber of the first cylinder (6), the or each first duct (8) comprising in succession, in the direction towards the discharge face (10), a first valve seat (14) adapted to receive a first valve (12), then a first orifice (16) towards the discharge face (10), the first orifice (16) having a geometry which is adapted to generate a first swirl level in the first cylinder (6);
- at least one second gas inlet duct (8) opening into a discharge face (10) of the cylinder head (4) in the combustion chamber of the second cylinder (6), the or each second duct (8) comprising in succession, in the direction towards the discharge face (10), a second valve seat adapted to receive a second valve (12), then a second orifice (16) towards the discharge face (10), the second orifice (16) having a geometry which is adapted to generate a second swirl level in the second cylinder (6),
**characterised in that** the first and second orifices (16) each comprise at least two frustum portions (32, 40) of different rotatory profile, widening towards the discharge face (10) and offset from the axis of the corresponding valve seat (14), and **in that** the offset of at least one of the offset portions from the second orifice (16) is different from the offset of each offset portion of the first orifice (16) in such a way that the swirl level in the first cylinder is substantially equal to the swirl level in the second cylinder.

2. Engine (2) according to claim 1, **characterised in that** the first frustum portion is obtained by a first milling carried out by means of a conical miller with an axis parallel to the axis X-X' of the valve seat but spaced by a distance "e1" in a direction of orientation Y-Y' forming an angle α with a reference axis "d", and **in that** the second frustum portion is obtained by a second conical milling with an axis parallel to the axis X-X' and spaced by a distance "e2" in a direction of orientation Z-Z' forming an angle "β" with the reference axis "d".

3. Engine (2) according to any one of claims 1 to 2, **characterised in that** the first orifice (16) further comprises at least one frustum portion having a rotatory profile which is coaxial with the axis of the corresponding valve seat (14).

## Patentansprüche

1. Verbrennungsmotor (2) eines Kraftfahrzeugs, der einen ersten Zylinder (6), einen zweiten Zylinder (6) und einen Zylinderkopf (4) umfasst, der mit jedem Zylinder (6) einen Brennraum bildet, wobei der Zylinderkopf (4) Folgendes umfasst:
- mindestens einen ersten Gaseinlasskanal (8), der hin zu einer Austrittsfläche (10) des Zylinderkopfs (4) in den Brennraum des ersten Zylinders (6) mündet, wobei der oder jeder erste Kanal (8) nacheinander in der Richtung hin zur Austrittsfläche (10) einen ersten Ventilsitz (14), der angepasst ist, um ein erstes Ventil (12) aufzunehmen, und dann eine erste Ausmündung (16) hin zur Austrittsfläche (10) umfasst, wobei die erste Ausmündung (16) eine Geometrie aufweist, die angepasst ist, um ein erstes Drallniveau im ersten Zylinder (6) zu erzeugen;
- mindestens einen zweiten Gaseinlasskanal (8), der hin zu einer Austrittsfläche (10) des Zylinderkopfs (4) in den Brennraum des zweiten Zylinders (6) mündet, wobei der oder jeder zweite Kanal (8) nacheinander in der Richtung hin zur Austrittsfläche (10) einen zweiten Ventilsitz, der angepasst ist, um ein zweites Ventil (12) aufzunehmen, und dann eine zweite Ausmündung (16) hin zur Austrittsfläche (10) umfasst, wobei die zweite Ausmündung (16) eine Geometrie aufweist, die angepasst ist, um ein zweites Drallniveau im zweiten Zylinder (6) zu erzeugen,
**dadurch gekennzeichnet, dass** die erste und die zweite Ausmündung (16) jeweils mindestens zwei unterschiedliche Stumpfabschnitte mit Rotationsprofil (32, 40) umfassen, die sich hin zur Austrittsfläche (10) erweitern und in Bezug auf die Achse des entsprechenden Ventilsitzes (14) achsversetzt sind, und **dadurch**, dass sich der Achsversatz von mindestens einem der achsversetzten Abschnitte der zweiten Ausmündung (16) vom Achsversatz jedes achsversetzten Abschnitts der ersten Ausmündung (16) unterscheidet, damit das Drallniveau im ersten Zylinder im Wesentlichen gleich dem Drallniveau im zweiten Zylinder ist.

2. Motor (2) nach Anspruch 1, **dadurch gekennzeichnet, dass** der erste Stumpfteil durch eine erste Fräsung erhalten wird, die mithilfe eines Kegelstumpffräsers mit paralleler Achse zur Achse X-X' des Ventilsitzes, jedoch um eine Distanz "e1" längs einer Orientierungsrichtung Y-Y' beabstandet, die einen Winkel α mit einer Referenzachse "d" bildet, ausgeführt wird, und **dadurch**, dass der zweite Stumpfteil durch eine zweite Kegelstumpffräsung mit paralleler Achse zur Achse X-X' und um eine Distanz "e2" längs einer Orientierungsrichtung Z-Z' beabstandet, die einen Winkel "β" mit der Referenzachse "d" bildet, ausgeführt wird.

3. Motor (2) nach einem der Ansprüche 1 bis 2, **dadurch gekennzeichnet, dass** die erste Ausmündung (16) ferner mindestens einen Stumpfabschnitt mit Rotationsprofil umfasst, der zur Achse des entsprechenden Ventilsitzes (14) koaxial ist.
